# EUROPEAN PATENT APPLICATION

(11) **EP 4 787 223 A1**
(43) Date of publication of application: **05.08.2026**
(21) Application number: 24870533.7
(22) Date of filing: 18.09.2024
(51) Int. Cl.: G06F 40/35

(54) **METHOD AND APPARATUS FOR INFORMATION PROCESSING, AND DEVICE AND STORAGE MEDIUM**

(30) Priority: 28.09.2023 CN 202311285164
(71) Applicant: Beijing Zitiao Network Technology Co., Ltd., Beijing 100190 (CN); Lemon Inc., Grand Cayman, KY1-1205 (KY)
(72) Inventor: XIAN, Junli, Beijing 100028 (CN); LI, Xing, Los Angeles, California 90066 (US); MEI, Jie, Beijing 100028 (CN); SHI, Xing, Beijing 100028 (CN); LU, Fei, Beijing 100028 (CN); WU, Peng, Beijing 100028 (CN); GAO, Zeng, Beijing 100028 (CN)
(74) Representative: Grünecker Patent- und Rechtsanwälte PartG mbB
(86) International application number: PCT/CN2024/119488
(87) International publication number: WO 2025/066989

(57) **Abstract**

According to the embodiments in the disclosure, there are provided a method, apparatus, device, and storage medium for information processing. In the method, historical interaction information for an interaction event is generated based on the interaction event between a target object and at least one business component, the historical interaction information including at least a knowledge element, the knowledge element describing a business object associated with the interaction event. The historical interaction information is provided for interaction between the target object and a digital assistant. As such, the embodiments in the disclosure are capable of using the knowledge element to describe the business object involved in the interaction event, thereby supporting the digital assistant in providing richer interaction capabilities.

## Description

The present application claims priority to Chinese Patent Application No. 202311285164.9, filed on September 28, 2023 and entitled "METHOD, APPARATUS, DEVICE, AND STORAGE MEDIUM FOR INFORMATION PROCESSING", which is incorporated herein by reference in its entirety.

### FIELD

Example embodiments in the disclosure generally relate to the field of computers, and in particular, to a method, apparatus, device, and computer-readable storage medium for information processing.

### BACKGROUND

With the rapid development of Internet technologies, the Internet has become an important platform for people to obtain and share content. Users may access the Internet via terminal devices to enjoy various Internet services.

Additionally, the Internet platform may also provide users with capabilities related to various types of information processing. How to improve the accuracy of such information processing has become a focus of attention.

### SUMMARY

In a first aspect in the disclosure, a method for information processing is provided. The method includes: generating, based on an interaction event between a target object and at least one business component, historical interaction information for the interaction event, the historical interaction information including at least a knowledge element, and the knowledge element describing a business object associated with the interaction event; and providing the historical interaction information for interaction between the target object and a digital assistant.

In a second aspect in the disclosure, an apparatus for information processing is provided. The apparatus includes: a generating module configured to generate, based on an interaction event between a target object and at least one business component, historical interaction information for the interaction event, the historical interaction information including at least a knowledge element, and the knowledge element describing a business object associated with the interaction event; and a providing module configured to provide the historical interaction information for interaction between the target object and a digital assistant.

In a third aspect in the disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect.

In a fourth aspect in the disclosure, a computer-readable storage medium is provided. The computer-readable storage medium has a computer program stored thereon, the computer program executable by a processor to implement the method of the first aspect.

It would be appreciated that the content described in the Summary section in the disclosure is neither intended to identify key or essential features of the embodiments in the disclosure, nor is it intended to limit the scope of the disclosure. Other features in the disclosure will be readily envisaged through the following description.

### BRIEF DESCRIPTION OF THE DRAWINGS

The above and other features, advantages and aspects of the embodiments in the disclosure will become more apparent in combination with the drawings and with reference to the following detailed description. In the drawings, the same or similar reference symbols refer to the same or similar elements, where:
FIG. 1 illustrates a schematic diagram of an example environment in which embodiments in the disclosure may be implemented;
FIG. 2 illustrates an example system architecture according to some embodiments in the disclosure;
FIG. 3 illustrates an example record entry according to some embodiments in the disclosure;
FIG. 4 illustrates a schematic diagram of generating a knowledge element of a document according to some embodiments in the disclosure;
FIG. 5 illustrates a flowchart of a method for information processing according to some embodiments in the disclosure;
FIG. 6 illustrates a block diagram of an apparatus for information processing according to some embodiments in the disclosure; and
FIG. 7 illustrates a block diagram of a device capable of implementing a plurality of embodiments in the disclosure.

### DETAILED DESCRIPTION

It may be understood that before using the technical solutions disclosed in the embodiments in the disclosure, the relevant users shall be informed of the type, range of use, use scenarios, etc. of the information involved in the disclosure in an appropriate manner and the authorization of the relevant users shall be obtained in accordance with relevant laws and regulations. The relevant users may include any type of subject of rights, such as individuals, enterprises, and groups.

For example, in response to receiving an active request from a user, prompt information is sent to the relevant user to clearly prompt the relevant user that the requested operation will require access to and use of information of the relevant user. As such, the relevant user may independently choose, based on the prompt information, whether to provide the information to software or hardware, such as an electronic device, an application, a server, or a storage medium, that performs the operations of the technical solutions in the disclosure.

As an optional but non-limiting implementation, in response to receiving the active request from the relevant user, the prompt information may be sent to the relevant user in the form of, for example, a pop-up window, in which the prompt information may be presented in text. Furthermore, the pop-up window may also include a selection control for the user to select whether to "agree" or "disagree" to provide the personal information to the electronic device.

It may be understood that the above process of notifying and obtaining user authorization is only illustrative and does not limit the implementations in the disclosure, and other manners that satisfy the relevant laws and regulations may also be applied in the implementations in the disclosure.

It may be understood that when this technical solution is adopted, the data involved (including but not limited to the data itself, acquisition, use, storage and transmission of the data) shall comply with the requirements of corresponding laws, regulations and related provisions.

The term "responsive to" as used herein represents a state in which a corresponding event occurs or a condition is satisfied. It will be understood that the timing of the execution of a subsequent action performed responsive to the event or condition is not necessarily strongly correlated with the time at which the event occurs or the condition is satisfied. For example, in some cases, the subsequent action may be performed immediately when the event occurs or the condition is satisfied, while in other cases, the subsequent action may be performed after a period of time has elapsed since the event occurred or the condition was satisfied.

The embodiments in the disclosure will now be described in more detail with reference to the drawings. Although some embodiments in the disclosure are shown in the drawings, it would be appreciated that the disclosure may be implemented in various forms and should not be construed as limited to the embodiments set forth herein. Rather, these embodiments are provided for a more thorough and complete understanding of the disclosure. It would be appreciated that the drawings and embodiments in the disclosure are only used for illustrative purposes, and are not used to limit the protection scope of the disclosure.

It should be noted that the titles of any section/sub-section provided herein are not limiting. Various embodiments are described throughout this disclosure, and any type of embodiment may be included under any section/sub-section. Furthermore, the embodiments described in any section/sub-section may be combined with any other embodiments described in the same section/sub-section and/or different section/sub-section in any manner.

In the description of the embodiments in the disclosure, the term "include/comprise" and similar terms should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other definitions, either explicit or implicit, may also be included below. The terms "first", "second", etc. may refer to different or same objects. Other definitions, either explicit or implicit, may also be included below.

As used herein, the term "model" may learn an association between respective inputs and outputs from training data, so that a corresponding output may be generated for a given input after the training is completed. The generation and use of the model may be based on technologies permitted by laws and regulations, such as machine learning, or simply available technologies. As an example, deep learning is a machine learning algorithm that uses multiple layers of processing units to process inputs and provide corresponding outputs. Herein, a "model" may also be referred to as a "machine learning model", a "machine learning network", or a "network", which terms are used interchangeably herein. A model may in turn include different types of processing units or networks.

As briefly mentioned above, people may already use various types of information processing tools to improve the efficiency of information processing. For example, some digital assistants are capable of generating corresponding responses based on dialog interactions (e.g., text or voice) with users.

However, such an information processing process is usually a generalized capability that provides similar information processing capabilities to a large number of users. However, in the case where different users have different interaction habits and needs, it may be difficult for a user to obtain the desired information processing results.

The embodiments in the disclosure provide a solution for information processing. Specifically, historical interaction information for an interaction event may be generated based on the interaction event between a target object (e.g., a user or an organization) and at least one business component. The historical interaction information includes at least a knowledge element, and the knowledge element describes a business object associated with the interaction event. Furthermore, the historical interaction information may be provided for interaction between the target object and a digital assistant.

As such, the embodiments in the disclosure are capable of using knowledge elements to describe the business objects involved in the interaction event, thereby supporting the digital assistant in providing richer interaction capabilities.

The example embodiments in the disclosure are described below with reference to the drawings.

### Example Environment

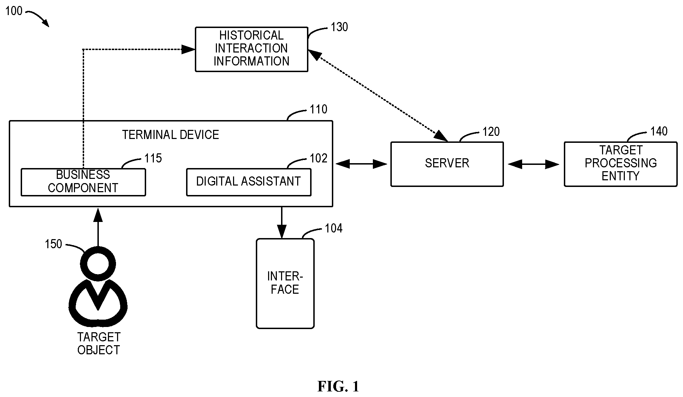

FIG. 1 illustrates a schematic diagram of an example environment 100 in which the embodiments in the disclosure may be implemented. As shown in FIG. 1, in the environment 100, a terminal device 110 may be used to provide a digital assistant 102 for a target object 150. Such a target object may include a user, an organization, or the like, where the organization may be an enterprise, a group, a department, or the like.

For example, such a digital assistant 102 may also be referred to as a digital assistant or a digital robot. It would be appreciated that although the digital assistant 102 is shown to be included in the terminal device 110 in FIG. 1, part of the processing capability of the digital assistant 102 may, for example, be based at least partially on a server 120. For example, a front end part (e.g., the part for presentation) of the digital assistant 102 may be included in the terminal device 110, while a back end part (e.g., the part for information processing) of the digital assistant 102 may be included in the server 120.

In some examples, the digital assistant 102 may be, for example, a digital assistant that assists the target object 150 in, for example, office work, or may be any other suitable forms of entities. The digital assistant 102 may also run independently or be integrated into a specific application.

In some embodiments, the digital assistant 102 may be enabled (e.g., invoked or initiated) in an appropriate manner, such as through a shortcut key, a button, or voice. If the digital assistant 102 is in an active state, the terminal device 110 may present an interface 104 associated with the digital assistant 102. The interface 104 may be in the style of a conversational user interface (also referred to as a chat interface or a chat window), or may be in any other appropriate forms. As will be described in detail below, such an interface 104 may also include interface elements for information exchange, such as a message input box, message list, message bubble, and the like. Through the interface 104, the digital assistant 102 may acquire information (also referred to as first information) input by the target object 150.

Such input information may include, for example, any appropriate types of messages, such as a text message, image message, voice message, spreadsheet message, link message, other appropriate types of messages, and the like.

Furthermore, the server 120 may allow the target object 150 to interact with the digital assistant 102 to acquire information generated by the digital assistant 102. Alternatively, as will be described in detail below, with the authorization of the target object 150, the information generated by the digital assistant 102 may also be based on historical interactions between the target object 150 and at least one business component 115.

Such a business component may include a component that may provide an appropriate type of business service for the target object 150, examples of which may include but are not limited to: office components, tool components, and the like. In some embodiments, such a business component may be installed on the same terminal device 110. Alternatively or additionally, such a business component may also be installed on other terminal devices or provided as a cloud service.

In some embodiments, such a business component 115 may include a plurality of office components in an office suite. The office suite may be a set of office components developed to improve office efficiency, such as an office component for creating and editing documents, for creating and editing spreadsheets, for drawing, and the like.

In some embodiments, the plurality of office components include a plurality of the following: a chat component, a document component, an audio and video meeting component, an email component, a calendar component, a schedule component, a task component, an objectives and key results (OKR) component, and/or other appropriate office components that are currently available or may be developed in the future.

In some embodiments, the digital assistant 102 may be a separate application different from the business component 115. Alternatively, the digital assistant 102 may also be a function or component that is suitably integrated into the business component 115.

In some embodiments, the historical interaction information 130 may be maintained at an appropriate electronic device, such as the terminal device 110, the server 120, and/or other appropriate electronic devices, as needed. The historical interaction information 130 may include, for example, both interaction information stored on the terminal device 110 and interaction information that has been uploaded to the server 120.

As will be described in detail below, the historical interaction information 130 may be provided for use in the interaction between the digital assistant 102 and the target object 150. As an example, the digital assistant 102 may acquire the input information from the target object 150, and the digital assistant 102 or the server 120 may generate corresponding information (also referred to as third information) based on the input information and the historical interaction information 130. The historical interaction information 130 may, for example, indicate a historical interaction process between the target object 150 and the at least one business component 115.

Furthermore, the server 120 or the digital assistant 102 may send the generated third information to a target processing entity 140. Furthermore, the server 120 or the digital assistant 102 may generate corresponding information (also referred to as second information) based on information returned by the target processing entity 140 (i.e., a processing result for the third information). Such second information may be presented to the target object 150 via, for example, the interface 104 corresponding to the digital assistant 102.

The target processing entity 140 may be a processing entity based on appropriate information processing technologies, and may implement one or more of the functions of text generation, image generation, summarization, encoding, translation, chatbots, etc. The target processing entity 140 may also be any other suitable forms of entities.

In some embodiments, the terminal device 110 communicates with the server 120 to enable the provision of the service of the digital assistant 102. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a positioning device, a television receiver, a radio broadcast receiver, an e-book device, a gaming device, or any combination of the foregoing, including the accessories and peripherals of these devices or any combination thereof. In some embodiments, the terminal device 110 may also support any type of interface for the target object 150 (such as "wearable" circuitry, etc.). The server 120 may be various types of computing systems/servers capable of providing computing power, including but not limited to mainframes, edge computing nodes, computing devices in cloud environments, and the like.

Although only one server 120 is shown in FIG. 1, the environment 100 may include a plurality of servers 120. For example, the historical interaction information 130 may be stored locally or in a second server 120 based on needs and the authorization of the relevant user, and the target processing entity 140 may run on a third server 120. It would be appreciated that this is only an example description, without suggesting any limitation to the scope of the disclosure.

It would be appreciated that the structure and functions of the environment 100 are described for illustrative purposes only, without suggesting any limitation to the scope of the disclosure.

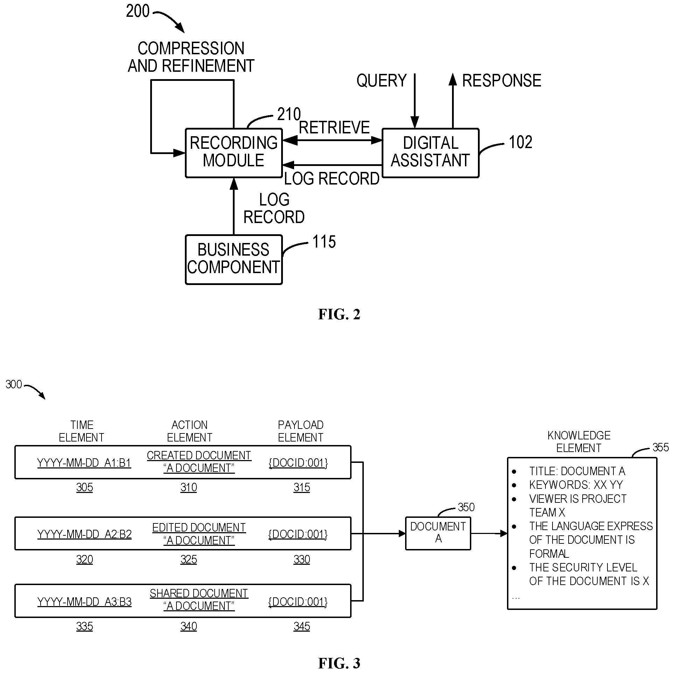

The process of generating and managing the historical interaction information 130 will be described below with reference to FIG. 2, which illustrates an example system architecture 200 according to embodiments in the disclosure.

As shown in FIG. 2, when the target object 150 interacts with the business component 115, the business component 115 may generate a log record and send the log record to a recording module 210.

Furthermore, the recording module 210 may generate a corresponding record entry based on the received log record, and constructs a record library. In some embodiments, such a record entry may include a knowledge element (Knowledge) for describing a business object corresponding to a historical interaction event. In some embodiments, the record library may be maintained at an appropriate electronic device, which for example may be stored at the terminal device 110 or at the server 120.

In some embodiments, such a business object may include a business object generated by the target object 150 in the process of interacting with the business component 115, a business object edited by the target object 150, a business object referenced by the target object 150, a business object shared by the target object 150, and the like. Taking a document component as an example the business component 115, the historical interaction event may include a creation event of a specific document in the document component by the target object 150. Correspondingly, the business object corresponding to the document creation event is the specific document.

In some embodiments, the knowledge element may be a natural language description of the business object, which aims to abstract and/or compress the content of the business object. For example, taking a document object as an example of the business object, the knowledge element may be used to describe a theme, a completion status, an audience, a language, an expression style, and the like of the document object.

It would be appreciated that information of different dimensions may be selected to generate the knowledge element for describing the business object, depending on the type of the business object. For example, taking a chat as an example of the business object, the knowledge element may be used to describe, for example, a type of the chat (e.g., whether it is a private chat), an overview of the chat, and the like.

As such, by maintaining the knowledge element in the record entry, the embodiments in the disclosure may describe or represent the business object involved in the corresponding historical interaction event with a limited content length.

In some embodiments, the record entry may also include a time element for indicating a time of occurrence of the historical interaction event. For example, still taking the creation of the document as an example of the historical interaction event, such a time element may, for example, indicate the creation time of the document.

In some further embodiments, the record entry may also include an action element for indicating an event type of the historical interaction event. Still taking the creation of the document as an example of the historical interaction event, such an action element may, for example, indicate that the event type of the historical interaction event is a "creation" type.

In some embodiments, the record entry may also include a payload element for indexing the business object corresponding to the corresponding historical interaction event. Taking a document as an example of the business object, the payload element may include, for example, a document number or a document identifier for indexing the document.

As such, in some scenarios, after the target object 150 interacts with the business component 115, the recording module 210 may generate a corresponding record entry. Such a record entry may be represented as, for example, {time element, action element, knowledge element, payload element} to describe the historical interaction event from a plurality of preset dimensions.

FIG. 3 illustrates an example record entry according to some embodiments in the disclosure. As shown in FIG. 3, for example, three record entries corresponding to three historical interaction events between the target object 150 and the document component may be maintained in the record library. Such record entries may respectively indicate "time elements" 305, 320, and 335 corresponding to the three interaction events; action elements 310, 325, and 340 corresponding to the three interaction events; payload elements 315, 330, and 345 corresponding to the three interaction events; and knowledge elements 355 of the business object (i.e., document 350) corresponding to the three interaction events.

As discussed above, the knowledge element aims to describe and summarize the content of the business object, and its core capability is the abstraction and compression of content information. In some embodiments, the recording module 210 may generate a first part of the knowledge element based on metadata of the business object, such that the knowledge element may indicate the metadata of the business object.

Taking a document-type object (also referred to as a document) as an example, the knowledge element of the document may be used to indicate one or more items of metadata of the document.

In some embodiments, the knowledge element of the document may indicate identification information of the document. Such identification information may include, for example, a title of the document, such as "Document A".

In some embodiments, the knowledge element of the document may indicate user information of the document, where the user information indicates at least one user associated with the document. For example, the knowledge element of the document may indicate that the creator(s) of the document include user X and user Y. As another example, the knowledge element of the document may further indicate that the editors of the document include N users, and the main editing contributors are user X and user Y.

In some embodiments, the knowledge element of the document may indicate time information of the document, where the time information indicates a time of occurrence of a historical event associated with the document. For example, the knowledge element of the document may indicate the creation time of the document.

In some embodiments, the knowledge element of the document may indicate propagation information of the document, where the propagation information indicates a degree of propagation of the document. For example, the knowledge element of the document may indicate the number of times the document has been read, the number of times the document has been shared, and the like.

In some embodiments, the knowledge element of the document may indicate permission information of the document, where the permission information indicates a permission management policy of the document-type object. For example, the knowledge element of the document may indicate a confidentiality level of the document within the organization.

In some embodiments, the knowledge element of the document may indicate a business component to which the document belongs. For example, the knowledge element of the document may indicate that the document is related to a specific business component.

Taking a chat-type object (also referred to as a chat) as an example of the business object, the knowledge element of the chat may indicate one or more items of metadata of the chat.

In some embodiments, the knowledge element of the chat may indicate a chat type of the chat. Such a chat type may include: a topical chat, an internal chat, an external chat, a public chat, a non-public chat, a private chat, a group chat, and the like.

By using the knowledge element to indicate the metadata of the business object, business objects to be matched more may be located conveniently the embodiments in the disclosure.

In some embodiments, the recording module 210 may further generate a second part of the knowledge element based on content of the business object, such that the knowledge element may describe the content of the business object.

Taking a document-type object (also referred to as a document) as an example, the knowledge element of the document may be used to describe various aspects of the content of the document.

In some embodiments, the knowledge element of the document may be used to indicate a completion status of the content of the document. For example, the knowledge element may indicate that the document was completed within a specific period of time. Alternatively, the knowledge element may indicate that the document has not been completed.

In some embodiments, the knowledge element of the document may be used to indicate an overview of the content of the document. For example, such an overview may be used to summarize a core theme or view of the content of the document. It would be appreciated that the overview of the content of the document may be generated in any appropriate manner.

In some embodiments, the knowledge element of the document may be used to indicate a type of the content of the document. For example, such a type may be used to indicate whether the document is a product requirement type document, a project progress management document, or the like.

In some embodiments, the knowledge element of the document may be used to indicate a keyword of the content of the document. For example, one or more representative keywords in the content of the document may be extracted based on an appropriate keyword determination method.

In some embodiments, the knowledge element of the document may further be used to indicate a target user of the content of the document. Such a target user may include, for example, a viewer of the document.

In some embodiments, the knowledge element of the document may be used to indicate style information of the content of the document, and such style information may be used to describe a language or an expression style of the content of the document.

In this way, the knowledge element may be used to compress and refine the content of the document, thereby supporting the digital assistant to perform corresponding processing and response using the knowledge element of the document without transmitting the original content of the document.

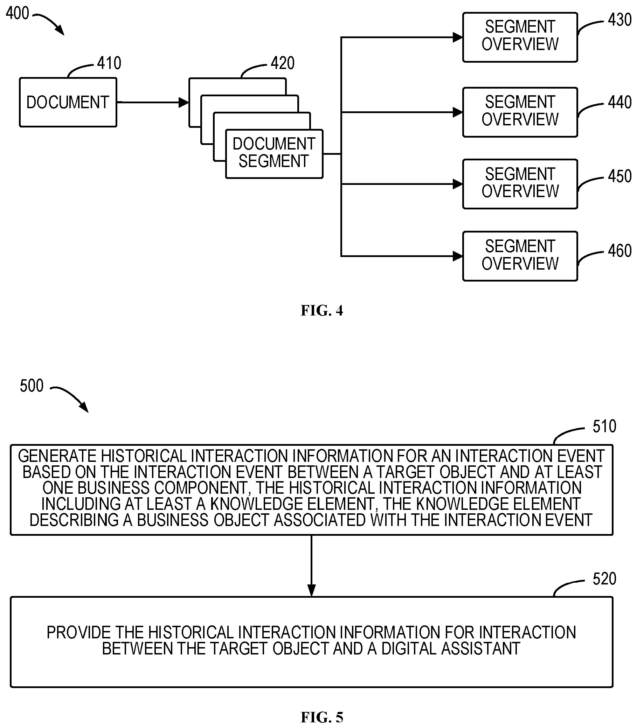

In some embodiments, the knowledge element of the document may further be used to indicate an overview of each of the plurality of segments of the document. FIG. 4 illustrates a schematic diagram of generating a knowledge element of a document according to some embodiments in the disclosure.

As shown in FIG. 4, the document 410 may be divided into a plurality of segments 420, for example. In some embodiments, the recording module 210 may split the document 410 into the plurality of segments 420 based on a structure of the document. For example, the recording module 210 may split the document 410 into the plurality of segments 420 corresponding to different chapters based on chapter information of the document.

Alternatively, the recording module 210 may further split the document based on other appropriate information. Such information may include, for example, but is not limited to: an editor, an editing time, and the like.

Furthermore, the recording module 210 may generate overviews corresponding to the plurality of segments 420, such as a segment overview 430, a segment overview 440, a segment overview 450, and a segment overview 460. The recording module 210 may maintain the generated segment overviews 430 to 460 in the knowledge element of the document. It would be appreciated that the overview of each segment will have more fine-grained information compared with the overall overview of the content of the document, thereby enabling the digital assistant to more accurately determine whether it is related to the received input information.

In some embodiments, when generating the segment overview of each segment, the recording module 210 may further consider order information between the segments. Such order information aims to represent an association of the content of each segment in the document. For example, the segment overview corresponding to the "introduction" part may reflect that this overview corresponds to the "introduction" part of the document.

In some embodiments, the recording module 210 may further use reference information to generate the segment overviews of each segment. Such reference information may be used to facilitate understanding of the content of the document. For example, some documents may contain some non-generic words, and in the absence of an explanation of the non-generic words, it may be difficult to accurately generate an overview of the document. Therefore, the recording module 210 may use the knowledge element to indicate the definition and description of these non-generic words, thereby improving the accuracy of information processing by the digital assistant 102. For example, the digital assistant may more accurately respond to a request or input containing non-generic words.

By splitting the document into a plurality of document segments, the embodiments in the disclosure may increase the amount of information contained in the knowledge element of the document, thereby supporting the digital assistant in improving the precision of information processing.

Taking a chat-type object (also referred to as a chat) as an example, the knowledge element of the chat may be used to describe the content of the chat.

In some embodiments, the knowledge element of the chat may be used to indicate a function description of the chat. For example, the knowledge element of the chat may indicate that the chat corresponds to a product requirement discussion group or a product function feedback group.

In some embodiments, the knowledge element of the chat may further be used to indicate an overview of message content in the chat. For example, the knowledge element of the chat may indicate a theme discussed in the messages in the chat, such as " the progress of project X was discussed".

In some embodiments, a plurality of messages in the chat may further be aggregated into a plurality of message sets, and the knowledge element of the chat indicates an overview of each of the plurality of message sets.

In some embodiments, the plurality of message sets are aggregated based on times of the plurality of messages in the chat-type object. Alternatively, the plurality of message sets are aggregated based on topics to which the plurality of messages in the chat belong. For example, the recording module 210 may further split the messages in the chat into the plurality of message sets based on factors such as a speaker, a topic theme, and a message time, and generate content overviews of the message sets, respectively.

The process of generating the knowledge element is described above by taking document and chat as examples of business objects. It would be appreciated that the knowledge elements of other types of business objects may be generated based on a similar method, to indicate the metadata and/or content of the corresponding business objects.

Additionally, based on what is introduced above, the knowledge element may be organized according to a preset content structure to construct structured information. Specifically, the knowledge element may have a content structure corresponding to a type of the business object (e.g., a document object, a message object, etc.).

By using the structured knowledge element to maintain multi-dimensional information of the business object, the embodiments in the disclosure are capable of facilitating the searching and locating of the corresponding business object, and are also capable of compressing the content of the document, thereby reducing the management and maintenance cost of the record entry.

In some embodiments, as discussed above, the record entry may also include an action element for indicating an event type of the interaction event.

In some embodiments, the event type may include a production event associated with the business object. Such a production event may correspond to a production process such as the generation, editing, or the like of the business object.

Alternatively or additionally, the event type may be a consumption event associated with the business object. Such a consumption event may correspond to a consumption process such as the reading, subscribing, adding to favorites, or the like of the business object.

Alternatively or additionally, the event type may be a circulation event associated with the business object. Such a circulation event may correspond to a circulation process such as the sharing of the business object, the presenting of the business object in a search scenario, or the like.

Alternatively or additionally, the event type may be a management event associated with the business object. Such a management event may correspond to a management process such as permission setting of the business object.

Alternatively or additionally, the event type may be an interaction event associated with the business object. Such an interaction event may correspond to an interaction process such as referencing or replying to the business object.

Taking a document-type object as an example of the business object, the event type of the interaction event for the document may include, for example, a production event associated with the document. Such production events may include, for example, but are not limited to: a creation event of the document, an editing event of the document, and the like.

Additionally or alternatively, the event type of the interaction event for the document may include, for example, a consumption event associated with the document. Such a consumption event may include, for example, but is not limited to: reading the document, commenting on the document, liking the document, adding the document to favorites, printing the document, moving the document, downloading the document, subscribing to the document, adding a shortcut to the document, and the like.

Additionally or alternatively, the event type of the interaction event for the document may include, for example, a circulation event associated with the document. Such a circulation event may include, for example, but is not limited to: the document shared to a chat, the document shared to a meeting, the document attached to a schedule, a collaborator added to the document, the document clicked in a search, the document presented in a search, and the like.

Additionally or alternatively, the event type of the interaction event for the document may include, for example, a management event associated with the document. Such a management event may include, for example, but is not limited to: permission management of the document, such as security level setting, collaborator management, sharing permission setting, and the like.

Taking a message-type object (also referred to as a message) as an example of the business object, the event type of the interaction event for the message may include, for example, a production event associated with the message. Such a production event may include, for example, but is not limited to: editing a message draft, sending a message, and the like.

Additionally or alternatively, the event type of the interaction event for the message may include, for example, a consumption event associated with the message. Such a consumption event may include, for example, but is not limited to: reading the message, marking the message, adding the message to favorites, pinning the message on top, pinning (Pin) the message, adding a task based on the message, translating the message, deleting the message, and the like.

Additionally or alternatively, the event type of the interaction event for the message may include, for example, an interaction event associated with the message. Such an interaction event may include, for example, but is not limited to: replying to the message with an emoticon, referencing the message, adding a chat topic, forwarding the message (forwarding a single message, forwarding a plurality of messages), and the like.

Additionally or alternatively, the event type of the interaction event for the message may include, for example, a circulation event associated with the message. Such a circulation event may include, for example, but is not limited to: sharing of the message content, and the like. Different from message forwarding, such content sharing may be performed, for example, by generating a link to the message content.

In this way, the embodiments in the disclosure are capable of using the preset event type to accurately represent the type of the interaction event between the target object 150 and the business component 102. Additionally, for different types of business objects, different preset event types may be set, thereby the accuracy of the expression of the action element may be improved.

It would be appreciated that the record entry may also include other appropriate elements for describing other appropriate dimensions of the corresponding historical interaction event.

Based on this approach, the recording module 210 may support the interaction between the target object 150 and the digital assistant 102 by maintaining a set of record entries in the record library. Such a record library may also be similar to "memory information" of the digital assistant, thereby helping the digital assistant to improve the quality of the generated reply content.

In some embodiments, it is considered that as the target object 150 interacts with the business component 115 more frequently, the size of its corresponding record library will also become larger and larger. In order to manage historical interaction information more effectively, the recording module 210 may further perform compression processing on the record entries.

For example, the recording module 210 may perform compression on the record entries in the record library periodically, for example, to compress a plurality of record entries into one compressed record entry. For example, the recording module 210 may perform compression processing of the record entries based on the time of occurrence of the historical interaction event.

In some embodiments, in a case where a plurality of historical interaction events have occurred for more than a threshold duration (e.g., one month), the recording module 210 may remove the record entries of the plurality of historical interaction events from the record library and generate a corresponding compressed record entry.

For example, the recording module 210 may identify a set of record entries to be compressed from the record library, and such a set of record entries to be compressed may correspond to, for example, associated interaction events (e.g., associated with the same business object) whose occurrence dates have exceeded the threshold duration.

For example, the target object 150 may have created document A, edited document A, and shared document A within a week a month ago. Correspondingly, three record entries corresponding to these three historical interaction events may be previously maintained in the record library. Furthermore, the recording module 210 determines that the three historical interaction events all occurred a month ago, and may compress the three record entries into a single compressed record entry.

In the process of compressing a plurality of record entries into a single compressed record entry, the recording module 210, for example, may only retain important information in the plurality of record entries, thereby reducing the storage and management overhead of the record entries.

In some embodiments, the manner of compressing record entries may further include, for example, retaining part of the record entries to be compressed. Still taking the creation of document A, the editing of document A, and the sharing of document A as an example, the recording module 210 may only retain the record entry corresponding to "editing document A", which may also be referred to as a compressed record entry.

Such a recording manner may also be similar to the manner of managing human memory, that is, for historical events that occurred earlier, the recording module may maintain relatively vague record information, on the contrary, for historical events that occurred more recently, the recording module may maintain more precise record information.

In some embodiments, the recording module 210 may use a compression model to implement the compression of record entries. Specifically, for example, the recording module 210 may provide the plurality of record entries to be compressed to the recording model, so as to obtain a compressed record entry corresponding to the plurality of record entries to be compressed. Such a compression model may be implemented using an appropriate machine learning model.

In some examples, the compression model may be the target processing entity 140 discussed with reference to FIG. 1. That is, the recording module 210 may obtain the compressed record entry by providing the target processing entity 140 with a guiding word for instructing the target processing entity 140 to perform compression and the plurality of record entries to be compressed. For example, such a guiding word may be "please select the three most representative record entries from the following plurality of record entries", or "please compress the following plurality of record entries into a single entry".

Based on this approach, the recording module 210 may periodically compress the record entries, for example, to reduce the management and maintenance cost of the record entries.

In some embodiments, with the knowledge and authorization of the target object 150, the recording module 210 may further reflect on the record entries to generate interaction pattern information associated with the target object 150. Such interaction pattern information may be used to indicate an interaction characteristic corresponding to at least one historical interaction event.

For example, the recording module 210 may extract a common feature based on a plurality of record entries to reflect the interaction characteristic associated with the target object 150. For example, the recording module 210 may extract the corresponding interaction characteristic as "writing a weekly report on Monday afternoon", or "viewing meeting minutes before writing a weekly report", etc. based on a plurality of historical record entries corresponding to the target object 210 writing a weekly report.

In some embodiments, the recording module 210 may use a specific processing model to implement the refinement of interaction pattern information. Specifically, for example, the recording module 210 may provide the plurality of record entries to be refined to the processing model, so as to obtain one or more items of interaction pattern information corresponding to the plurality of record entries to be refined. Such a processing model may be implemented using an appropriate machine learning model.

In some examples, the processing model may be the target processing entity 140 discussed with reference to FIG. 1. That is, the recording module 210 may obtain the refined interaction pattern information by providing the target processing entity 140 with a guiding word for instructing the target processing entity 140 to perform interaction characteristic refinement and the plurality of record entries to be refined.

Based on the above approach, the recording module 210 may maintain one or more of the record entries corresponding to the historical interaction event, the compressed record entry obtained by compressing the record entries, and/or the interaction pattern information obtained by refining the record entries for the generation of the second information.

In some embodiments, as discussed with reference to FIG. 1, the server 120 may use the target processing entity 140 to generate the second information.

Specifically, the server 120 may process the first information based on the historical interaction information 130 to generate third information. Furthermore, the server 120 may provide the third information to the target processing entity 140, where the target processing entity 140 is different from the digital assistant 102. Additionally, the server 120 may generate the second information based on a processing result of the target processing entity 140 for the third information.

In some embodiments, the target processing entity 140 may include a target model, such as a target language model. Correspondingly, the third information may include, for example, input information for the target model. In some scenarios, such third information may also be referred to as a prompt, a guiding word, or a prompt for the target model. It would be appreciated that, depending on the needs of the actual scenario, the target processing entity 140 may further include other appropriate models.

In order to obtain more accurate and effective third information, the server 120 may process the first information based on a set of record entries included in the historical interaction information 130. In some embodiments, after the digital assistant 102 receives the first information (also referred to as query information) input by the target object 150, the server 130 may determine at least one record entry associated with the first information from the set of record entries maintained by the recording module 210.

It would be appreciated that any appropriate technologies may be used to determine the at least one record entry associated with the first information. For example, the server 120 may determine at least one record entry associated with a semantics of the first information from the set of record entries based on semantic analysis of the first information. Alternatively, the server 120 may also determine at least one record entry associated with the semantics of the first information from the record library based on a keyword search or match.

As an example, the server 120 may determine the at least one associated record entry based on, for example, a similarity between the record entry and the first information. Specifically, the server 120 may determine a set of description vectors corresponding to the set of record entries maintained in the record library and a target description vector corresponding to the received first information. Furthermore, the server 120 may determine at least one record entry associated with the first information from the set of record entries based on the target description vector and the set of description vectors corresponding to the set of record entries.

As an example, the server 120 may determine, from the set of record entries, a record entry whose angle between the corresponding description vector and the target description item vector is smaller than a threshold, as the at least one record entry associated with the first information.

For example, the first information input by the target object is "please write this week's weekly report with reference to the style of document A". Correspondingly, the record entry determined by the server 120 may include one or more record entries associated with the business object "document A", such as the record entry shown in FIG. 3.

Correspondingly, the server 120 may further generate third information to be provided to the target processing entity 140 based on the first information and the at least one associated record entry. For example, the server 120 may add additional information corresponding to the at least one associated record entry while retaining the first information, to generate the third information. For example, such additional information may be generated, for example, based on the at least one associated record entry.

For example, the server 120 may use all or part of the knowledge element of "document A" as the third information to provide to the target processing entity 140. For example, the server 120 may provide the part "the language expression of the document is formal" in the knowledge element 355 that is used to represent the style information of "document A" to the target processing entity 140, so that the target processing entity 140 may respond to the first information according to the style information.

As another example, the server 120 may also rewrite the first information based on the at least one associated record entry, for example, expand the first information, so that the first information may more accurately reflect the needs of the target object 150.

In some embodiments, the server 120 may further process the first information based on a set of compressed record entries included in the historical interaction information 130 to generate the second information. For example, similar to the process of determining the associated record entry, the server 120 may determine at least one compressed record entry associated with the first information from the set of compressed record entries maintained by the recording module 210.

Furthermore, the server 120 may use the at least one determined compressed record entry and the first information to generate third information to be provided to the target processing entity 140. For example, the server 120 may add additional information corresponding to the at least one associated compressed record entry while retaining the first information, to generate the third information. For example, such additional information may be generated, for example, based on the at least one associated compressed record entry.

As another example, the server 120 may also rewrite the first information based on the at least one associated compressed record entry, for example, expand the first information, so that the first information may more accurately reflect the needs of the target object 150.

In some embodiments, the server 120 may further process the first information based on interaction pattern information included in the historical interaction information 130 to generate the second information. For example, the server 120 may determine at least one item of interaction pattern information associated with the first information.

Furthermore, the server 120 may use the at least one piece of determined interaction pattern information and the first information to generate third information to be provided to the target processing entity 140. For example, the server 120 may add additional information corresponding to the at least one piece of associated interaction pattern information while retaining the first information, to generate the third information. For example, such additional information may be generated, for example, based on the at least one piece of associated interaction pattern information.

As another example, the server 120 may also rewrite the first information based on the at least one piece of associated interaction pattern information, for example, expand the first information, so that the first information may more accurately reflect the needs of the target object 150.

Based on this approach, the embodiments in the disclosure are capable of generating the third information that better meets the interaction needs of the target object 150 based on the historical interaction information 130, and may improve the accuracy of information processing while maintain the user's personal interaction habits.

Furthermore, the terminal device 110 may further acquire the second information generated based on the first information and provide the second information to the target object 150 as a reply to the first information.

The example process of generating the second information by the digital assistant 102 based on the first information input by the target object 150 is discussed above. Based on the above approach, the embodiments in the disclosure may improve the accuracy of information processing, so that the generated second information better meets the interaction habits of the target object 150 and its needs for interaction results.

Additionally, in this way, the embodiments in the disclosure may further support richer types of requests from the user. For example, the target object 150 may input the first information "please write a weekly report for project X with reference to my last weekly report" to the digital assistant 102, and correspondingly, the digital assistant 102 may generate a first draft of this week's weekly report based on historical interaction information corresponding to the historical interaction event associated with the writing of the last weekly report that occurred between the target object 150 and the document component. In this way, the embodiments in the disclosure may further improve the quality of content generation by the digital assistant.

As another example, the target object 150 may input the first information "please write a weekly report for project X" to the digital assistant 102, and correspondingly, the digital assistant 102 may enclose an overview of an associated meeting or a meeting minutes access link in the draft weekly report according to the interaction pattern information (e.g., viewing meeting minutes before writing a weekly report) determined from the historical interaction information. In this way, the embodiments in the disclosure may help improve the information processing efficiency of the target object.

In some embodiments, for example, the digital assistant 102 may also use the record entry maintained by the recording module 210 to directly respond to the first information input by the target object 150, without relying on the target processing entity 140.

For example, the target object 150 may input "please help find a document whose viewer is the X project team". Correspondingly, the digital assistant 102 may use the knowledge element of the business object maintained by the recording module 210 to respond to this input. Taking FIG. 3 as an example, the knowledge element 355 of "document A" may indicate that "the viewer is the X project team". Therefore, the digital assistant 102 may more accurately respond to the input of the target object 150.

It would be appreciated that the above document search is only an example scenario, and by maintaining the knowledge element of the business object, the embodiments in the disclosure may greatly enrich the types of scenarios that the digital assistant may respond to.

As an example, by using the knowledge element, the digital assistant may more accurately respond to pinpointed search requests of the target object, such as "a document that investigated XXX". As another example, by using the knowledge element, the digital assistant may more accurately respond to exploratory search requests of the target object, such as "what to do if XX goes wrong". As another example, by using the knowledge element, the digital assistant may more accurately respond to summaries of a large amount of data, such as "what work did project team A do in the first quarter". As another example, by using the knowledge element, the digital assistant may further provide personalized services for the target object, for example, the digital assistant may provide inheritance based on the creation style for the target object, for example, support the generation of a new document or email according to the existing creation style of the target object.

### Example Process

FIG. 5 shows a flowchart of a process 500 of information processing according to some embodiments in the disclosure. The process 400 may be implemented by an appropriate electronic device or a combination of electronic devices (e.g., the server 120, the terminal device 110, or a combination of the server 120 and the terminal device 110 in FIG. 1). For ease of description, the process 500 is described below with reference to FIG. 1 by taking the server 120 as an example.

As shown in the figure, at block 510, the server 120 generates historical interaction information for an interaction event based on the interaction event between a target object and at least one business component, the historical interaction information including at least a knowledge element, the knowledge element describing a business object associated with the interaction event.

At block 520, the server 120 provides the historical interaction information for interaction between the target object and a digital assistant.

In some embodiments, the knowledge element at least indicates metadata of the business object.

In some embodiments, the business object includes a document-type object, and the metadata includes at least one of the following: identification information of the document-type object, user information of the document-type object indicating at least one user associated with the document-type object, time information of the document-type object indicating a time of occurrence of a historical event associated with the document-type object, propagation information of the document-type object indicating a degree of propagation of the document-type object, permission information of the document-type object indicating a permission management policy of the document-type object, and a business component to which the document-type object belongs.

In some embodiments, the business object includes a chat-type object, and the metadata indicates a chat type of the chat-type object, the chat type including one or more of the following: a topical chat, an internal chat, an external chat, a public chat, a private chat, and a group chat.

In some embodiments, the knowledge element at least describes content of the business object.

In some embodiments, the business object includes a document-type object, and the knowledge element indicates at least one of the following information of the content of the document-type: a completion status of the content, an overview of the content, a type of the content, a keyword of the content, a target user of the content, and style information of the content.

In some embodiments, the business object includes a document-type object, the document-type object includes a plurality of segments, and the knowledge element indicates an overview of each of the plurality of segments of the document-type object.

In some embodiments, the plurality of segments are split based on a structure of the document-type object.

In some embodiments, the business object includes a chat-type object, and the knowledge element indicates at least one of the following: a function description of the chat-type object, and an overview of message content in the chat-type object.

In some embodiments, the business object includes a chat-type object, a plurality of messages in the chat-type object are aggregated into a plurality of message sets, and the knowledge element indicates an overview of each of the plurality of message sets.

In some embodiments, the plurality of message sets are aggregated based on times of the plurality of messages in the chat-type object; or the plurality of message sets are aggregated based on topics to which the plurality of messages in the chat belong.

In some embodiments, the knowledge element has a content structure corresponding to a type of the business object.

In some embodiments, the business object includes a document object, and the knowledge element is used to indicate definition description of a set of non-generic words included in the document object.

In some embodiments, the historical interaction information further includes an action element indicating an event type of the interaction event.

In some embodiments, the event type includes at least one of the following: a production event associated with the business object, a consumption event associated with the business object, a circulation event associated with the business object, a management event associated with the business object, and an interaction event associated with the business object.

In some embodiments, the historical interaction information further includes: a time element indicating a time of occurrence of the interaction event; and/or a payload element for indexing the business object associated with the interaction event.

In some embodiments, the process 500 further includes: acquiring first information input by the target object to the digital assistant; and generating second information at least based on the first information and the historical interaction information, as a reply of the digital assistant to the first information.

In some embodiments, generating the second information at least based on the first information and the historical interaction information includes: processing the first information based on the historical interaction information to generate third information; providing the third information to a target processing entity; and generating the second information based on a processing result of the target processing entity for the third information.

In some embodiments, the third information includes guidance information, and the target processing entity includes a target model.

In some embodiments, the historical interaction information includes a set of record entries, and generating the second information at least based on the first information and the historical interaction information includes: determining at least one record entry associated with the first information from the set of record entries; and generating the second information based on the first information and the at least one record entry.

### Example Apparatus and Device

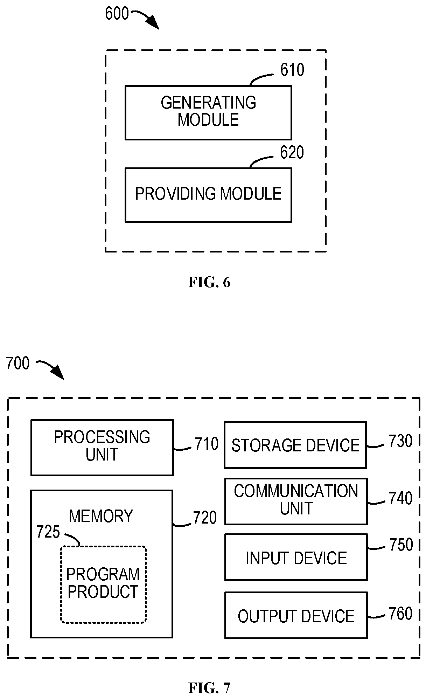

FIG. 6 shows a schematic structural block diagram of an apparatus 600 for information processing according to some embodiments in the disclosure. The apparatus 600 may be implemented as or included in the server 120, the terminal device 110, or a combination of the server 120 and the terminal device 110 in FIG. 1. Each module/component in the apparatus 600 may be implemented by hardware, software, firmware, or any combination thereof.

As shown in the figure, the apparatus 600 includes a generating module 610 and a providing module 620. The generating module 610 is configured to generate historical interaction information for an interaction event based on the interaction event between a target object and at least one business component, the historical interaction information including at least a knowledge element, the knowledge element describing a business object associated with the interaction event; and the providing module 620 is configured to provide the historical interaction information for interaction between the target object and a digital assistant.

In some embodiments, the knowledge element at least indicates metadata of the business object.

In some embodiments, the business object includes a document-type object, and the metadata includes at least one of the following: identification information of the document-type object, user information of the document-type object indicating at least one user associated with the document-type object, time information of the document-type object indicating a time of occurrence of a historical event associated with the document-type object, propagation information of the document-type object indicating a degree of propagation of the document-type object, permission information of the document-type object indicating a permission management policy of the document-type object, and a business component to which the document-type object belongs.

In some embodiments, the business object includes a chat-type object, and the metadata indicates a chat type of the chat-type object, the chat type including one or more of the following: a topical chat, an internal chat, an external chat, a public chat, a private chat, and a group chat.

In some embodiments, the knowledge element at least describes content of the business object.

In some embodiments, the business object includes a document-type object, and the knowledge element indicates at least one of the following information of the content of the document-type: a completion status of the content, an overview of the content, a type of the content, a keyword of the content, a target user of the content, and style information of the content.

In some embodiments, the business object includes a document-type object, the document-type object includes a plurality of segments, and the knowledge element indicates an overview of each of the plurality of segments of the document-type object.

In some embodiments, the plurality of segments are split based on a structure of the document-type object.

In some embodiments, the business object includes a chat-type object, and the knowledge element indicates at least one of the following: a function description of the chat-type object, and an overview of message content in the chat-type object.

In some embodiments, the business object includes a chat-type object, a plurality of messages in the chat-type object are aggregated into a plurality of message sets, and the knowledge element indicates an overview of each of the plurality of message sets.

In some embodiments, the plurality of message sets are aggregated based on times of the plurality of messages in the chat-type object; or the plurality of message sets are aggregated based on topics to which the plurality of messages in the chat belong.

In some embodiments, the knowledge element has a content structure corresponding to a type of the business object.

In some embodiments, the business object includes a document object, and the knowledge element is used to indicate definition description of a set of non-generic words included in the document object.

In some embodiments, the historical interaction information further includes an action element indicating an event type of the interaction event.

In some embodiments, the event type includes at least one of the following: a production event associated with the business object, a consumption event associated with the business object, a circulation event associated with the business object, a management event associated with the business object, and an interaction event associated with the business object.

In some embodiments, the historical interaction information further includes: a time element indicating a time of occurrence of the interaction event; and/or a payload element for indexing the business object associated with the interaction event.

In some embodiments, the apparatus 600 further includes an interaction module configured to: acquire first information input by the target object to the digital assistant; and generate second information at least based on the first information and the historical interaction information, as a reply of the digital assistant to the first information.

In some embodiments, the interaction module is further configured to: process the first information based on the historical interaction information to generate third information; provide the third information to a target processing entity; and generate the second information based on a processing result of the target processing entity for the third information.

In some embodiments, the third information includes guidance information, and the target processing entity includes a target model.

In some embodiments, the historical interaction information includes a set of record entries, and the interaction module is further configured to: determine at least one record entry associated with the first information from the set of record entries; and generate the second information based on the first information and the at least one record entry.

FIG. 7 shows a block diagram of an electronic device 700 in which one or more embodiments in the disclosure may be implemented. It would be appreciated that the electronic device 700 shown in FIG. 7 is only illustrative and should not constitute any limitation to the functions and scope of the embodiments described herein. The electronic device 700 shown in FIG. 7 may be used to implement the server 70, the terminal device 110, or a combination of the server 70 and the terminal device 110 in FIG. 1.

As shown in FIG. 7, the electronic device 700 is in the form of a general-purpose electronic device. The components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and may perform various processing based on programs stored in the memory 720. In a multiprocessor system, multiple processing units execute computer executable instructions in parallel to improve the parallel processing capability of the electronic device 700.

The electronic device 700 typically includes multiple computer storage medium. Such medium may be any available medium accessible by the electronic device 700, including but not limited to volatile and non-volatile medium, removable and non-removable medium. The memory 720 may be volatile memory (for example, a register, cache, a random access memory (RAM)), a non-volatile memory (such as a read-only memory (ROM), an electrically erasable programmable read-only memory (EEPROM), a flash memory), or any suitable combination thereof. The storage device 730 may be any removable or non-removable medium, and may include a machinereadable medium such as a flash drive, a disk, or any other medium, which may be used to store information and/or data and may be accessed within the electronic device 700.

The electronic device 700 may further include additional removable/non-removable, volatile/non-volatile memory medium. Although not shown in FIG. 7, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 720 may include a computer program product 725 having one or more program modules configured to perform various methods or acts of various embodiments in the disclosure.

The communication unit 740 enables communication with other electronic devices through the communication medium. Additionally, the functions of the components of the electronic device 700 may be implemented by a single computing cluster or multiple computing machines, which may communicate through communication connections. Therefore, the electronic device 700 may use a logical connection with one or more other servers, a network personal computer (PC), or another network node to operate in a networked environment.

The input device 750 may be one or more input devices, such as a mouse, a keyboard, a tracking ball, etc. The output device 760 may be one or more output devices, such as a display, a speaker, a printer, etc. The electronic device 700 may also communicate with one or more external devices (not shown) as needed via the communication unit 740, such as a storage device, a display device, etc., communicate with one or more devices that enable a user to interact with the electronic device 700, or communicate with any device (e.g., a network card, a modem, etc.) that enables the electronic device 700 to communicate with one or more other electronic devices. Such communication may be performed via input/output (I/O) interfaces (not shown).

According to an illustrative embodiment in the disclosure, there is provided a computer-readable storage medium having computer executable instructions stored thereon, the computer executable instructions being executed by a processor to implement the method described above. According to an illustrative embodiment in the disclosure, there is further provided a computer program product tangibly stored on a non-transitory computer-readable medium and including computer executable instructions, the computer executable instructions being executed by a processor to implement the method described above.

Various aspects in the disclosure are described herein with reference to flowcharts and/or block diagrams of methods, apparatuses, devices, and computer program products implemented according to the disclosure. It would be appreciated that each block of the flowcharts and/or block diagrams, and combinations of blocks in the flowcharts and/or block diagrams, may be implemented by computer-readable program instructions.

These computer-readable program instructions may be provided to a processing unit of a general-purpose computer, a special-purpose computer, or other programmable data processing apparatus to produce a machine, such that the instructions, when executed by the processing unit of the computer or other programmable data processing apparatus, produce an apparatus for implementing the functions/acts specified in one or more blocks of the flowcharts and/or block diagrams. These computer-readable program instructions may also be stored in a computer-readable storage medium, which instructions cause a computer, a programmable data processing apparatus, and/or other devices to work in a particular manner, and the computer-readable medium having the instructions stored thereon includes an article of manufacture including instructions for implementing various aspects of the functions/acts specified in one or more blocks of the flowcharts and/or block diagrams.

The computer-readable program instructions may be loaded onto a computer, another programmable data processing apparatus, or other devices, causing a series of operational steps to be performed on the computer, other programmable data processing apparatus, or other devices to produce a computer-implemented process, such that the instructions executed on the computer, other programmable data processing apparatus, or other devices implement the functions/acts specified in one or more blocks of the flowcharts and/or block diagrams.

The flowcharts and block diagrams in the drawings show the possibly implemented architectures, functions, and operations of the system, the method, and the computer program product according to multiple embodiments in the disclosure. In this regard, each block in the flowchart or block diagram may represent a module, program segment, or part of an instruction, which module, program segment, or part of an instruction contains one or more executable instructions for implementing the specified logical functions. In some alternative embodiments, the functions noted in the block may also occur in an order different from that noted in the drawings. For example, two consecutive blocks may actually be performed substantially in parallel, or they may sometimes be performed in the reverse order, depending on the functions involved. It would also be noted that each block of the block diagrams and/or flowcharts, and combinations of the blocks in the block diagrams and/or flowcharts, may be implemented in a special-purpose hardware-based system that perform the specified functions or acts, or may be implemented in a combination of special-purpose hardware and computer instructions.

The embodiments in the disclosure have been described above, and the above description is illustrative, non-exhaustive, and not limited to the disclosed embodiments. Many modifications and variations will be apparent to those of ordinary skill in the art without departing from the scope and spirit of the described embodiments. The terms used herein are chosen to best explain the principles, practical applications, or improvements to the technology in the market of the implementations, or to enable other ordinary skilled persons in the art to understand the implementations disclosed herein.

## Claims

1. A method for information processing, comprising:
generating historical interaction information for an interaction event based on the interaction event between a target object and at least one business component, the historical interaction information comprising at least a knowledge element, the knowledge element describing a business object associated with the interaction event; and
providing the historical interaction information for interaction between the target object and a digital assistant.

2. The method of claim 1, wherein the knowledge element comprises a first part generated based on metadata of the business object.

3. The method of claim 2, wherein the business object comprises a document-type object, and the metadata comprises at least one of:
identification information of the document-type object,
user information of the document-type object, the user information indicating at least one user associated with the document-type object,
time information of the document-type object, the time information indicating a time of occurrence of a historical event associated with the document-type object,
propagation information of the document-type object, the propagation information indicating a degree of propagation of the document-type object,
permission information of the document-type object, the permission information indicating a permission management policy of the document-type object, and
a business component to which the document-type object belongs.

4. The method of claim 2, wherein the business object comprises a chat-type object, and the metadata indicates a chat type of the chat-type object, the chat type comprising one or more of the following:
a topical chat;
an internal chat;
an external chat;
a public chat;
a private chat; and
a group chat.

5. The method of claim 1, wherein the knowledge element comprises a second part generated based on content of the business object.

6. The method of claim 5, wherein the business object comprises a document-type object, and the second part indicates at least one of the following:
a completion status of the content,
an overview of the content,
a type of the content,
a keyword of the content,
a target user of the content, and
style information of the content.

7. The method of claim 5, wherein the business object comprises a document-type object, the document-type object comprises a plurality of segments, and the knowledge element indicates an overview of each of the plurality of segments of the document-type object.

8. The method of claim 7, wherein the plurality of segments are split based on a structure of the document-type object.

9. The method of claim 5, wherein the business object comprises a chat-type object, and the knowledge element indicates at least one of:
a function description of the chat-type object, and
an overview of message content in the chat-type object.

10. The method of claim 5, wherein the business object comprises a chat-type object, a plurality of messages in the chat-type object are aggregated into a plurality of message sets, and the knowledge element indicates an overview of each of the plurality of message sets.

11. The method of claim 10, wherein,
the plurality of message sets are aggregated based on times of the plurality of messages in the chat-type object; or
the plurality of message sets are aggregated based on topics to which the plurality of messages in the chat belong.

12. The method of claim 1, wherein the knowledge element has a content structure corresponding to a type of the business object.

13. The method of claim 1, wherein the business object comprises a document object, and the knowledge element indicates definition description of a set of non-generic words comprised in the document object.

14. The method of claim 1, wherein the historical interaction information further comprises an action element indicating an event type of the interaction event.

15. The method of claim 14, wherein the event type comprises at least one of the following:
a production event associated with the business object,
a consumption event associated with the business object,
a circulation event associated with the business object,
a management event associated with the business object, and
an interaction event associated with the business object.

16. The method of claim 1, wherein the historical interaction information further comprises:
a time element indicating a time of occurrence of the interaction event; and/or
a payload element for indexing the business object associated with the interaction event.

17. The method of claim 1, further comprising:
acquiring first information input by the target object to the digital assistant; and
generating second information at least based on the first information and the historical interaction information, as a reply of the digital assistant to the first information.

18. The method of claim 17, wherein generating the second information at least based on the first information and the historical interaction information comprises:
processing the first information based on the historical interaction information to generate third information;
providing the third information to a target processing entity; and
generating the second information based on a processing result of the target processing entity for the third information.

19. The method of claim 18, wherein the third information comprises guidance information, and the target processing entity comprises a target model.

20. The method of claim 17, wherein the historical interaction information comprises a set of record entries, and generating the second information at least based on the first information and the historical interaction information comprises:
determining at least one record entry associated with the first information from the set of record entries; and
generating the second information based on the first information and the at least one record entry.

21. An apparatus for information processing, comprising:
a generating module, configured to generate historical interaction information for an interaction event based on the interaction event between a target object and at least one business component, the historical interaction information comprising at least a knowledge element, the knowledge element describing a business object associated with the interaction event; and
a providing module configured to provide the historical interaction information for interaction between the target object and a digital assistant.

22. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 20.

23. A computer-readable storage medium having a computer program stored thereon, the computer program being executable by a processor to perform the method of any of claims 1 to 20.
